# EUROPEAN PATENT SPECIFICATION

(11) **EP 0 554 773 B1**
(45) Date of publication and mention of the grant of the patent: **27.09.1995**
(21) Application number: 93101184.5
(22) Date of filing: 27.01.1993
(51) Int. Cl.: F16C 33/78

(54) **Protective shield for rolling-contact bearings**
Schutzschild für Wälzlager
Bouclier pour palier à roulement

(30) Priority: 05.02.1992 IT TO920027 U
(43) Date of publication of application: 11.08.1993
(73) Proprietor: SKF INDUSTRIE S.P.A., I-10123 Torino (IT)
(72) Inventor: Pairone, Gianfranco, I-10146 Torino (IT)
(74) Representative: Lotti, Giorgio

(56) References cited:
- AT-B- 265 761
- DE-A- 1 625 522
- DE-A- 2 251 466
- DE-A- 3 005 050
- DE-A- 3 346 661
- DE-B- 1 073 809
- DE-B- 1 169 214
- US-A- 4 645 362

## Description

This invention falls within the field of rolling-contact bearings, and in particular relates to a protective shield, preferably of plastics construction, for positioning within a bearing.

The main purposes of protective shields for rolling-contact bearings are to prevent the infiltration of external contaminants such as dust and dirt, and to limit grease losses. A protective shield according to the preamble of claim 1 is known from e.g. DE-B-1 169 214.

Various attempts have been made in the past to find a plastics shield as an alternative to rubberized shields which, although giving excellent performance in terms of grease losses, dust exclusion and friction torque, have a cost comparable to the traditional sealed shields.

These attempts to construct a plastics shield to be inserted into a groove in the outer race of a bearing have proved ineffective because of the effect of the different coefficient of thermal expansion of the two materials in contact. In this respect, under the high temperature which occurs during operation, a plastics shield tends to expand more than the steel of the bearing within which the shield is radially constrained, until it undergoes permanent deformation. On returning to ambient temperature under rest conditions, the shield acquires an undesirable gap in its seat, so that it no longer fulfils its purpose.

An object of the invention is to provide a plastics shield which overcomes the aforesaid drawbacks by being able to expand freely within its seat in accordance with the temperature present at any given time, without undergoing permanent deformation.

A further object is to provide a shield of low cost and simple construction, which performs in a manner comparable to traditional rubber shields.

These and further objects and advantages, which will be more apparent hereinafter, are attained according to the invention by a protective shield as defined in claim 1.

The structural and operational characteristics of a preferred but non-limiting embodiment of the shield according to the invention are described hereinafter with reference to the accompanying drawings, in which:
Figure 1 is a plan view of the shield according to the invention;
Figure 2 is a side view of the shield of Figure 1;
Figure 3 is a section on the line III-III of Figure 1 to an enlarged scale;
Figure 4 shows a detail of Figure 1 to an enlarged scale; and
Figures 5 and 6 show the detail of Figure 4 in two different configurations which the shield is able to assume.

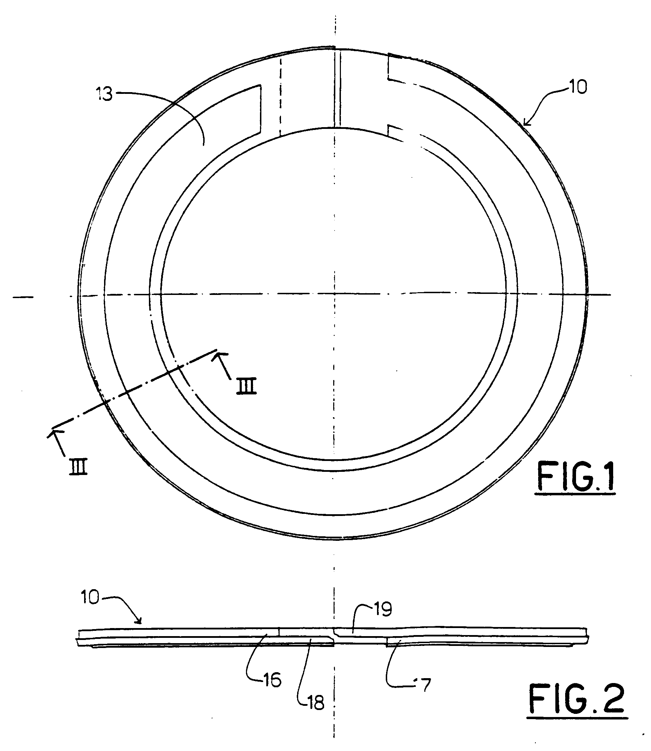

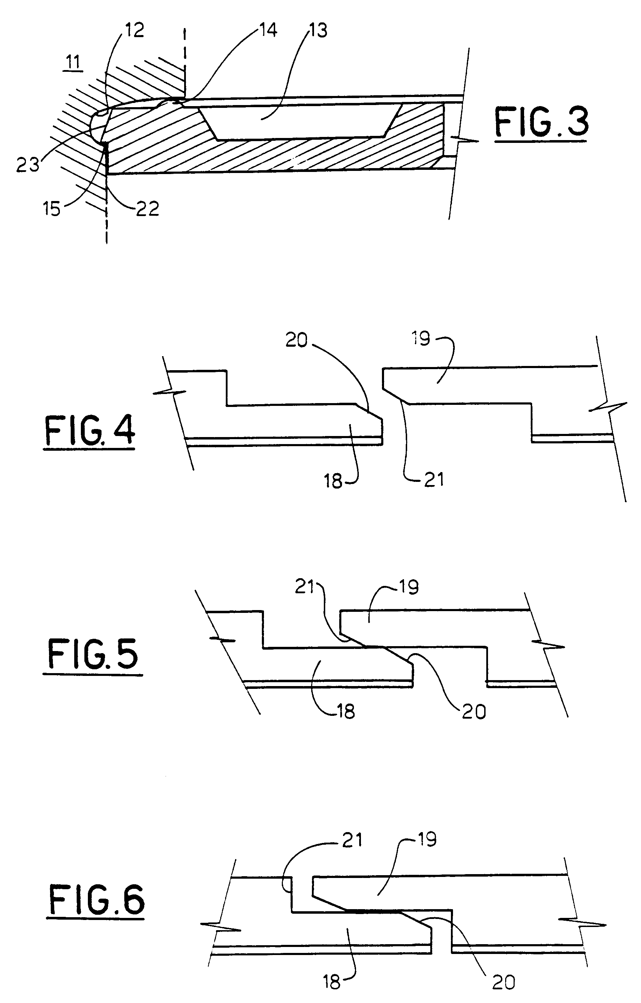

With reference to Figures 1 and 2, a plastics shield according to the invention is indicated overall by 10. The shield 10 is an open circular ring of flattened section, to be inserted into a groove 12 (Figure 3) formed in the outer race of a rolling-contact bearing 11.

The ring 10 comprises in one face a circumferential groove of trapezium cross-section and a circumferential raised portion 14 of rounded shape to enable the ring 10 to be centered within the groove 12. The ring 10 is provided on its perimeter with a circumferential rim 15 to enable it to be snap-inserted into the groove 12 and prevent its accidental withdrawal.

The ends 16 and 17 of the ring 10 carry respective superposable appendices or tongues 18 and 19 provided with bevelled faces 20 and 21 inclined at an angle of about 30° to the plane containing the shield.

To ensure correct operation of the shield 10, according to the invention it must be constructed of a material having a greater coefficient of thermal expansion than the steel forming the bearing 11 in which the shield is housed. The shield, formed by injection moulding, can be advantageously constructed of nylon 6.6 with the addition of 30 percent by weight of glass fibres.

Because of its open form and the elasticity of its constituent material, the shield is able to open and close circumferentially, to elastically adapt to the diameter of the aperture 22 within which it is positioned.

Before mounting, the relative position of the tongues 18 and 19 is as shown in Figures 2 and 4, in which the ends of the tongues are practically aligned along the same vertical line, with the bevelled faces 20 and 21 opposing.

The perimetral extension of the ring 10 is greater than the circular aperture 22, so that the ring can be inserted into the groove 12 through the aperture 22. To facilitate the insertion of the ring 10 into the circular aperture 22 of the bearing, the perimetral edge of the shield comprises a portion 23 of frusto-conical surface which terminates lowerly to define said circumferential rim 15.

After its mounting, the shield 10 tends to widen out to occupy the maximum possible circumference within the aperture 22, with the result that the tongues 18 and 19 position themselves as shown in Figure 5.

When in operation, because of the high temperature which can arise the bearing 11 tends to expand, and with it the shield 10 which, because of the physical properties of the constituent material, expands to a greater extent. Under these conditions the tongues 18 and 19 tend to become nearly totally superposed, as shown in Figure 6.

As will be apparent the shield according to the invention ensures effective protective action throughout the entire temperature range to which a rolling-contact bearing is normally subjected, and its shape is such as to prevent any permanent deformation arising which would shorten its life and could compromise the proper operation of the bearing.

A single preferred embodiment of the shield has been described and illustrated in detail, however the invention is not limited to this single example and numerous modifications, obvious to an expert of the art, can be made thereto without leaving the scope of the invention, as defined by the following claims.

## Claims

1. A protective shield (10) for rolling-contact bearings, of the type consisting of a circular ring which is substantially flat in a radial plane mounted within a bearing (11), the ring being formed of a material having a coefficient of thermal expansion greater than that of the steel of the bearing (11), and the shield (10) being provided with means for its connection to, and its centering on, the bearing (11), characterised in that the ring is an open ring of substantially flat radial section, provided with superposable tongues or appendices (18, 19) extending from the open ends.

2. A shield as claimed in claim 1, characterised in that said connection means consist of a circumferential rim (15) for snap-insertion into a groove (12) provided in the outer race of the bearing (11), said centering means consisting of a circumferential raised portion (14) of rounded shape arranged to axially abut against said groove (12).

3. A shield as claimed in claim 1, characterised by being of greater circumferential length than the circumferential extension of the circular aperture (22) in the bearing (11) into which it is inserted.

4. A shield as claimed in claim 1, characterised by comprising a perimetral frusto-conical surface (23) to facilitate its insertion into the groove (12) in the bearing (11) and to prevent its accidental withdrawal.

5. A shield as claimed in claim 1, characterised in that said appendices (18, 19) are provided with respective bevelled opposing faces (20, 21).

6. A shield as claimed in claim 1, characterised by being constructed of nylon 6.6 with the addition of glass fibres.

## Patentansprüche

1. Schutzschild (10) für Wälzlager, des Typs bestehend aus einem kreisförmigen Ring, der im wesentlichen flach in einer radialen Ebene liegt und innerhalb eines Lagers (11) befestigt ist, wobei der Ring aus einem Material geformt wird, das einen höheren Wärmeausdehnungskoeffizient aufweist als der des Stahles des Lagers (11), und wobei der Schutzschild (10) mit Mitteln versehen ist, um diesen mit dem Lager (11) zu verbinden und auf diesem zu zentrieren, dadurch gekennzeichnet, daß der Ring ein offener Ring ist, der im wesentlichen einen flachen radialen Querschnitt besitzt und mit überlagerbaren Zungen oder Fortsätzen (18, 19) ausgestattet ist, die sich von den offenen Enden ausgehend erstrecken.

2. Schutzschild nach Anspruch 1, dadurch gekennzeichnet, daß die Verbindungsmittel aus einem Umfangsrand (15) zum Einsetzen mittels Schnappverschluß in eine Nut (12) bestehen, die in dem äußeren Lagerring des Lagers (11) vorgesehen ist, und daß das Zentriermittel aus einem am Umfang befindlichen erhöhten Abschnitt (14) von abgerundeten Form besteht, der axial angrenzend an die Nut (12) angeordnet ist.

3. Schutzschild nach Anspruch 1, dadurch gekennzeichnet, daß er eine größere Umfangslänge besitzt als die Umfangserstreckung der kreisförmigen Aufnahme (22) in dem Lager (11), in die er eingesetzt wird.

4. Schutzschild nach Anspruch 1, dadurch gekennzeichnet, daß er eine perimetrale kegelstumpfförmige Oberfläche (23) umfaßt, um sein Einsetzen in die Nut (12) im Lager (11) zu vereinfachen und sein versehentliches Herausziehen zu verhindern.

5. Schutzschild nach Anspruch 1, dadurch gekennzeichnet, daß die Fortsätze (18, 19) mit entsprechend abgeschrägten, einander gegenüberliegenden Stirnseiten (20, 21) ausgestatet sind.

6. Schutzschild nach Anspruch 1, dadurch gekennzeichnet, daß er aus Nylon 6.6 mit Glasfaserzusatz konstruiert ist.

## Revendications

1. Bouclier protecteur (10) pour palier à roulement, du type constitué par un anneau circulaire sensiblement plat dans un plan radial, monté à l'intérieur d'un palier (11), ledit anneau étant formé d'une matière dont le coefficient de dilatation thermique est supérieur à celui de l'acier du palier (11), et le bouclier (10) comportant des moyens de liaison avec le palier (11) et de centrage sur celui-ci, caractérisé en ce que l'anneau est un anneau ouvert à section radiale sensiblement plate, pourvu de languettes ou appendices (18, 19) superposables qui s'étendent à partir de ses extrémités libres.

2. Bouclier selon la revendication 1, caractérisé en ce que les moyens de liaison consistent en un rebord circonférentiel (15) à insérer par encliquetage dans une rainure (12) ménagée dans la bague extérieure du palier (11), les moyens de centrage consistant en une partie circonférentielle surélevée (14) de forme arrondie agencée de manière à venir axialement en butée contre ladite rainure (12).

3. Bouclier selon la revendication 1, caractérisé en ce que sa longueur circonférentielle est supérieure à l'étendue circonférentielle de l'ouverture circulaire (22), ménagée dans le palier (11), dans laquelle il doit être inséré.

4. Bouclier selon la revendication 1, caractérisé en ce qu'il comprend sur sa périphérie une surface tronconique (23) pour faciliter son insertion dans la rainure (12) ménagée dans le palier (11) et pour empêcher son retrait accidentel.

5. Bouclier selon la revendication 1, caractérisé en ce que les appendices (18, 19) présentent des facettes respectives biseautées qui se font face.

6. Bouclier selon la revendication 1, caractérisé en ce qu'il est réalisé en nylon 6.6 dans lequel ont été ajoutées des fibres de verre.
